# EUROPEAN PATENT SPECIFICATION

(11) **EP 4 652 581 B1**
(45) Date of publication and mention of the grant of the patent: **09.12.2026**
(21) Application number: 23723087.5
(22) Date of filing: 19.04.2023
(51) Int. Cl.: G06V 40/12

(54) **FINGERPRINT FEATURE MATCHING WITH GRAPH NEURAL NETWORKS**
FINGERABDRUCKMERKMALSANPASSUNG MIT NEURONALEN GRAPHNETZWERKEN
MISE EN CORRESPONDANCE DE CARACTÉRISTIQUES D'EMPREINTES DIGITALES AVEC DES RÉSEAUX NEURONAUX EN GRAPHES

(43) Date of publication of application: 26.11.2025
(73) Proprietor: UAB "Neurotechnology", 06118 Vilnius (LT)
(72) Inventor: MATAITIS, Ignas, Vilnius (LT)
(74) Representative: AAA Law
(86) International application number: PCT/IB2023/053993
(87) International publication number: WO 2024/218538

(56) References cited:
- SHI YELIN ET AL: "Towards More Accurate Matching of Contactless Fingerprints With a Deep Geometric Graph Convolutional Network", IEEE TRANSACTIONS ON BIOMETRICS, BEHAVIOR, AND IDENTITY SCIENCE, IEEE, vol. 5, no. 1, 4 November 2022 (2022-11-04), pages 29 - 38, XP011930979, DOI: 10.1109/TBIOM.2022.3219842
- "Graph Neural Networks: Foundations, Frontiers, and Applications", 1 January 2022, SPRINGER NATURE SINGAPORE, Singapore, ISBN: 978-981-1660-54-2, article LING XIANG ET AL: "Graph Neural Networks: Graph Matching", pages: 277 - 295, XP093048008, DOI: 10.1007/978-981-16-6054-2_13
- LI YUJIA ET AL: "Graph Matching Networks for Learning the Similarity of Graph Structured Objects", 29 April 2019 (2019-04-29), XP093078881, Retrieved from the Internet <URL:https://proceedings.mlr.press/v97/li19d/li19d.pdf> [retrieved on 20230905], DOI: 10.48550/arxiv.1904.12787

## Description

### Technical field

The present invention relates to fingerprint recognition, and more specifically, to the application of graph neural networks for fingerprint feature matching.

### Background of the invention

Fingerprint matching is a challenging task, particularly when dealing with low-quality, distorted, or latent fingerprints, or matching fingerprints with small overlap area. There exists a large number of automated fingerprint matching algorithms. Well-known and widely used techniques are based on minutiae, which are features in a fingerprint pattern where fingerprint ridges end or bifurcate into branch ridges. As each finger has a unique minutiae pattern, minutiae-based matching primarily involves finding the alignment between two minutiae sets that yields the highest similarity according to a selected score definition.

Most widely used minutiae matching algorithms include a local minutiae matching stage. In this stage, minutiae from two fingerprints are compared based on characteristic attributes associated with them. A list of such attributes is typically called a minutia descriptor. Traditional techniques construct these descriptors based on the local geometrical structure of the minutia neighbourhood. For better matching, some methods incorporate additional textural information, such as local ridge frequency and local ridge orientation field. Usually, after determining corresponding minutiae pairs, matching algorithms proceed to a global consolidation stage. This stage assesses the consistency of local matches at the global level and based on that computes the final similarity score between the two fingerprints.

Such traditional minutiae matching approaches have several weaknesses. First, there are many ways to construct minutia descriptors, and any handcrafted method and selected attributes may not be optimal for matching. Furthermore, comparing these descriptors is not trivial and requires carefully designed formulas, which may not be optimal, too. As a result, these techniques are sensitive to missing or spurious minutiae, inaccurate minutia positions or angles, and distortion. In the consolidation stage, calculating the similarity score again requires manually designed heuristic rules. These rules may not work properly for all circumstances, and indeed are known to have shortcomings in cases with missing minutiae or small overlap area.

Several fingerprint matching techniques utilize not only minutiae, which are fingerprint features defined in the ISO/IEC 19794-2 and ANSI INCITS 378 standards, but also other local fingerprint features, such as sweat pores, dots, incipient ridges, etc. If such types of features are reliably extracted, these methods usually outperform those based solely on minutiae. However, these local feature-based methods have the same weaknesses as minutiae-only based methods, namely, feature descriptors and matching functions have to be handcrafted.

To avoid designing sophisticated rules for fingerprint matching, some techniques employ learning-based methods. For example, to improve minutia descriptor matching, certain techniques let a trainable classifier learn to determine whether two minutiae from different fingerprints should match or not match. A number of techniques also use machine learning in the consolidation stage, where the parameters of heuristics for combining local similarity scores into a single score are optimized to best separate same fingers from different fingers. Other techniques apply machine learning, specifically convolutional neural networks, to learn texture-based minutia or pore descriptors. However, the main disadvantage of these learning-based techniques is that machine learning is only applied to separate steps and the whole system cannot be trained in an end-to-end fashion, i.e. starting from two raw feature sets and learning the similarity between them.

One end-to-end trainable system that operates on raw fingerprints rather than pre-extracted features is described in [1]. In the disclosed method, a fingerprint is encoded into a fixed-length numerical representation by a convolutional neural network, and two fingerprints are compared by calculating vector similarity between their fixed-length representations. Although this approach has many advantages over previous techniques-such as considerably faster matching speeds and eliminating the need for extracting and matching fingerprint features-it has a key drawback: the two fingerprint representations are entirely independent of each other, and this may limit the accuracy of fingerprint matching.

If matching accuracy is a priority, a more sophisticated trainable matching function should be designed that would learn to compare two fingerprints and produce a similarity score. This can be achieved by formulating fingerprint feature matching as a graph matching problem and solving it using graph neural networks. Several techniques formulate fingerprint feature matching as a graph matching problem but solve it with heuristic graph matching methods, for instance, graph matching is applied for minutiae matching in [2] and [3], and for pore matching in [4]. On the other hand, graph neural networks have been applied for generic graph matching problems unrelated to fingerprint matching in a number of works, such as [5] and [6].

One method that employs a graph neural network in fingerprint matching is proposed in [7]. The authors represent fingerprint minutiae with their initial descriptors as nodes of a graph, and connect adjacent minutiae by edges. They propose a graph neural network to learn new minutia descriptors and similarities between minutia descriptors from different fingerprints. In this way, the newly learnt minutia descriptors become more distinctive, as they incorporate the geometry of the graph. However, the method's main limitation is that the final similarity score calculation between two fingerprints-the consolidation stage-is still implemented by a handcrafted function that is not learnt and may not be optimal. Another shortcoming of this method is that the two graphs being matched have no way of interacting with each other, as there are no cross-graph edges, and the lack of this interaction may limit the accuracy of fingerprint matching, too.

The present invention is a method designed to address and overcome the aforementioned shortcomings of both traditional and learning-based methods, offering further advantages over existing approaches in the field.

### Brief description of the invention

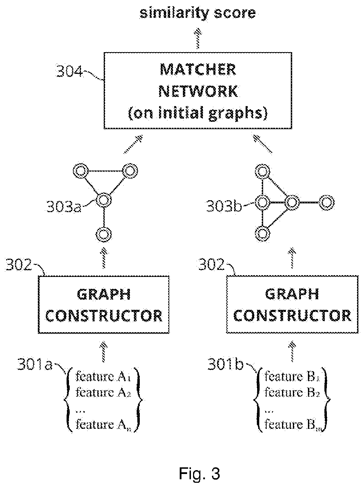

The disclosed invention introduces a novel fingerprint feature matching method, which comprises taking two initial sets of fingerprint features, constructing two graphs from these sets of features, and employing a graph neural network to compute a similarity score between the two graphs, which represents the similarity between the two fingerprints (Fig. 3).

The invention also introduces a novel end-to-end trainable system for fingerprint feature matching that stars with two graphs constructed from two sets of fingerprint features and learns to produce a similarity score between the two sets using labelled data. This approach eliminates the need for manually constructing structure-based minutia descriptors, since a graph neural network can learn to compute discriminative minutia representations based on graph structure and in such a way that is directly useful for matching. There is no need to design formulas for combining local matches into a global similarity score, as a graph neural network can learn to aggregate feature representations of the two graphs into a single number representing the similarity between the two fingerprints.

The present fingerprint feature matching method is not restricted to minutiae-based matching alone. Other local fingerprint features can be employed in addition to, or in place of, minutiae. Such features may include, for example, singularity points, sweat pores, ridge breaks, etc. The types of features that can be used with this matching method depend on the chosen feature extraction algorithm.

The present method is not limited to only prints of fingers. In fact, minutiae (or other features) from various friction ridge prints and impressions can be used in this method to identify a person. These other friction ridge patterns include, for example, palmprints and footprints.

The present method can be integrated into a biometric authentication system to reliably identify a person or verify a person's identity based on their fingerprints or other friction ridge patterns.

### Brief description of the drawings

The novel aspects of the present invention are set forth with particularity in the appended claims. The method itself, however, may be best understood by reference to the detailed description in conjunction with the accompanying drawings, in which:
- Fig. 1: shows an example of a fingerprint and examples of local features that may be present in a fingerprint. Different types of features are marked by distinct symbols. It should be noted that not all the features present in the shown fingerprint are marked.
- Fig. 2: shows an example of a graph constructed from the local fingerprint features shown in Fig. 1. The graph consists of nodes and edges. Different types of nodes are associated with the corresponding types of features.
- Fig. 3: shows the basic working principle of the present fingerprint feature matching method, which receives two fingerprint feature sets and produces a similarity score.
- Fig. 4: shows the basic working principle of a graph neural network which takes two initial graphs and produces a similarity score.
- Fig. 5: shows another variant of the graph neural network shown in Fig. 4, where the network is split into two separate networks: one that embeds initial graphs and another that takes the two embedded graphs and produces a similarity score.
- Fig. 6: shows the basic working principle of a fingerprint-based biometric authentication system that incorporates the present matching method and utilizes the graph neural network shown in Fig. 4. The drawing shows only the enrolment and verification processes, while the identification process is not shown.
- Fig. 7: shows the basic working principle of a fingerprint-based biometric authentication system that incorporates the present matching method and utilizes the two graph neural networks shown in Fig. 5. The drawing shows only the enrolment and verification processes, while the identification process is not shown.

The invention is described in detail below with reference to these drawings. Specific elements are labelled with consistent numbering throughout all the drawings, and a particular process is outlined by a dashed line and indicated by the same title throughout all the drawings.

### Detailed description of the invention

In the following description, numerous specific details are provided to offer a thorough and comprehensible understanding of the invention. However, the presented embodiments are not intended to limit the application of the invention, which can be implemented without these specific examples. Well-known methods, procedures, and components-especially those involving generic machine learning, graph neural networks, and biometric systems-are not described in detail to maintain focus on the core principles of the invention. This description should not be interpreted as restricting the invention to the given examples, but rather as illustrating various possible embodiments of the invention.

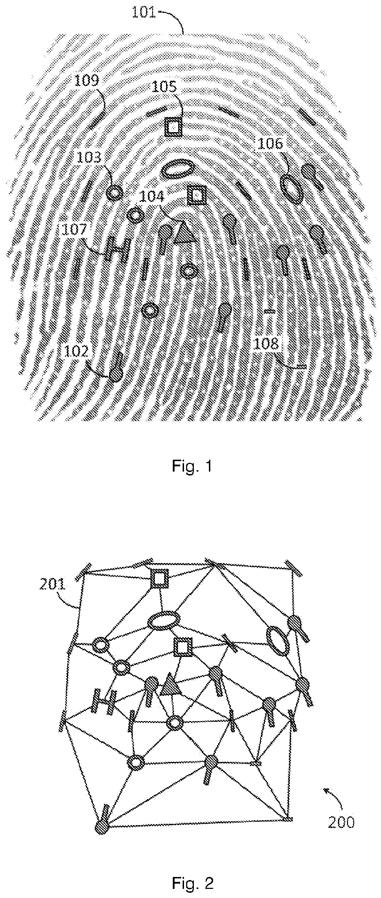

In the present method for fingerprint feature matching according to the invention, various types of local features extracted from a fingerprint (101) can be used (Fig. 1). These types of features may include, for example, minutiae (102), sweat pores (103), singularity points (104), dots (105), enclosures (106), ridge bridges (107), ridge breaks (108), etc. In fact, any prominent local features can be employed. Additionally, these features may not even be explicitly visible; for example, they may be regularly sampled points (109) on a fingerprint indicating the direction of ridge flow. The types of features that could be employed with the present matching method depend on the specification and capabilities of a chosen feature extraction algorithm, which must be run on fingerprints to prepare initial sets of features. A processing step may be necessary to process extracted features, such as filtering the features or deriving secondary features from the initial features, and assigning attributes to them.

In the context of graphs, local fingerprint features, such as those shown in Fig. 1, constitute a graph (200) and are referred to as graph nodes (Fig. 2). Each node may have several numerically encoded attributes. For example, in the case of minutiae, these attributes may include x- and *y*-coordinates, angle, type, quality, ridge curvature, etc. These attributes can also include uninterpretable numerical representations computed by, for instance, a convolutional neural network operating on a fingerprint image. There may be several types of nodes corresponding to different types of fingerprint features. Different types of nodes may have distinct sets of attributes. In Fig. 2, each present node type is illustrated by a unique symbol.

In addition to nodes, a graph can also have edges between nodes. Each edge (201) connects two nodes. Nodes can be connected in any chosen way; for example, each node may be connected to *k*-nearest neighbours, or to all the nodes up to a certain distance according to a chosen proximity metric. Edges may be either directed or undirected. A directed edge implies that if node A has node B as a neighbour, node B might not have node A as a neighbour. An edge may have several numerically encoded attributes. These attributes may be derived from node attributes, such as the distance between two minutiae, or the relative angle between two minutiae. Additionally, edge attributes many also include independent fingerprint features, such as the ridge count between two minutiae. If a graph has more than one type of nodes (e.g. minutiae and pores), there may be more than one type of edges connecting the nodes (e.g. edges between minutiae, edges between minutiae and pores, and edges between pores). Different types of edges may have different sets of attributes.

A graph may also have additional nodes that are not associated with any fingerprint features. For example, a graph may have a virtual node which may be connected with all the nodes of the graph.

In addition to node attributes and edge attributes, there may be some graph-level attributes associated with an entire graph. These attributes correspond to global fingerprint features, such as fingerprint quality, fingerprint orientation, probability that a finger belongs to a particular type, etc. Any numerical fingerprint representations, which, for example, may be computed by some convolutional neural network, may also be given as graph-level attributes.

In brief and more formally, a graph *G* = (*V,* E) is represented by a set of nodes V and a set of edges *E*. Optionally, each node *i* ∈ *V* may be associated with an attribute vector *zᵢ*, each edge (*i*, *j*) ∈ *E* may be associated with an attribute vector *zᵢⱼ*, and the entire graph *G* may be a associated with an attribute vector *z_{G}*.

The basic working principle of the present fingerprint feature matching method is illustrated in Fig. 3. Given two feature sets (301a, 301b), the method first constructs (302) two initial graphs *G*₁ *=* (*V*₁, *E*₁) (303a) and *G*₂ *=* (*V*₂, *E*₂) (303b). Then a graph neural network (304), which in this description is called the matcher network (or *matcher* for short), is used to calculated the similarity score s between the two initial graphs: $s = MATCHER \left({G}_{1}, {G}_{2}\right) .$

Inside the matcher network (304), the attribute vectors *zᵢ, zᵢⱼ* and *z_{G}* of each of the two graphs are called initial node, edge and graph-level representations, or hidden embeddings, respectively.

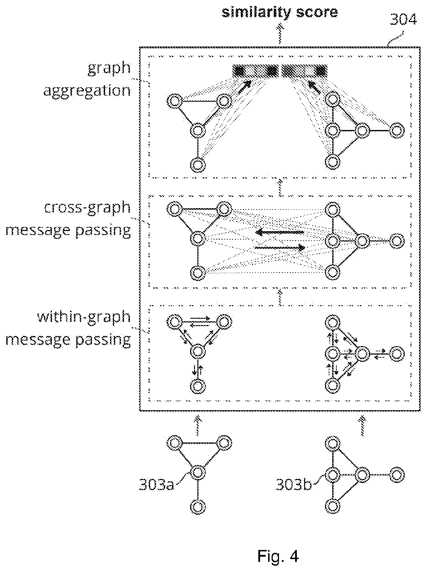

Fig. 4 illustrates the basic working principle of the matcher network (304). The matcher transforms node representations by a message passing process. Message passing layers pass information, i.e. messages, between nodes and produce discriminative node representations. Message passing layers can be within-graph and cross-graph. A within-graph layer pass messages only between nodes belonging to the same graph. A cross-graph layer pass messages between nodes belonging to separate graphs. After message passing, node representations of both graphs are aggregated into a single vector which is then reduced to a single value representing the similarity score between the two graphs.

An important part of the matcher network (304) is the within-graph message passing layers. For each node, a within-graph message passing layer gathers messages through edges from the node's neighbours and aggregates these messages into a new node representation. A message between two nodes may be calculated based on the current representations of the two nodes and the edge. More formally, a message passing layer transforms a node representation *zᵢ* to a new representation ${z}_{i}^{′}$ as ${z}_{i}^{′} = UPD \left({z}_{i},AGGR\left(\left\{{m}_{ij},∀j∈N\left(i\right)\right\}\right)\right) ,$ ${m}_{ij} = MSG \left({z}_{i}, {z}_{j}, {z}_{ij}\right) .$

Here _{MSG} is a function that calculates a message *mᵢⱼ* from the j-th node to the i-th node and in general may depend on the representations of both nodes *zᵢ* and *zⱼ* as well as edge representation *zᵢⱼ*. Messages from the *i*-th node's neighbourhood *N*(*i*), which is a set of nodes connected to node *i,* are aggregated to a single vector by the function _{AGGR} (for example, an element-wise summation). Then the function _{UPD} combines the initial node representation with the aggregation result and produces the updated node representation. The functions _{MSG}, _{AGGR} and _{UPD} need to be differentiable to enable training the neural network.

The message function _{MSG}, that calculates a message *mᵢⱼ* from the *j*-th node to the i-th node, may have various forms. Below are some examples: ${m}_{ij} = {Wz}_{j} ,$ ${m}_{ij} = {α}_{ij} W {z}_{j} ,$ ${m}_{ij} = MLP \left(\left[\left.{z}_{i}\right|\left|{z}_{j}\right|\left|{z}_{ij}\right.\right]\right) .$

In the first example, a message is calculated simply by multiplying a neighbour node representation *zⱼ* by a learnable weight matrix *W.* In the second example, each message *Wzⱼ* is scaled by a unique attention coefficient *αᵢⱼ,* which may depend on the representations of both nodes and may be normalized over all nodes in *N(i).* In the third example, a message is calculated by a multi-layer perceptron (_{MLP}) on concatenated representations of both nodes and an edge. Many other forms of message function are possible.

The aggregation function _{AGGR}, that takes a set of messages and returns a single aggregated message, may be any permutation invariant operation, for example, an element-wise sum, mean, or maximum. In some cases, the function _{AGGR} may have learnable parameters. In some cases, this function may not be permutation invariant, for example, it may be a recurrent neural network cell on a sequence of messages.

The update function _{UPD} combines the initial node representation *zᵢ* with the output of the function _{AGGR}, and produces the updated node representation ${z}_{i}^{′}$. This function may have various forms; for example, a simple sum followed by an activation, a concatenation, a multi-layer perceptron, a recurrent neural network cell, etc.

The functions _{MSG}, _{AGGR} and _{UPD} may be different for each message passing layer. In some cases, the message function _{MSG} may be different for each edge type. The aggregation function _{AGGR} may first aggregate messages coming from each edge type separately and differently, and then combine these partial aggregations into a single aggregation. The update function _{UPD} may be different for each node type.

It is important to note that some variants of message passing layers of a graph neural network can be described without the above message passing formalism and without explicit _{MSG}, _{AGGR} and _{UPD} functions. For example, stacking node representations into the matrix *Z* and denoting the graph adjacency matrix by *A,* a layer may be written as a single matrix operation $Z " = σ \left(AZW\right) ,$ here *σ* denotes a nonlinear activation function. A message passing layer may also be described as a spectral graph convolution. Other equivalent formulations to message passing are possible, too.

In addition to within-graph message passing layers, the matcher network (304) also contains cross-graph message passing layers, which pass messages between nodes belonging to separate graphs. These layers are able to update the representations of one graph based on the representations of the other graph. A node belonging to one graph may be connected to some or to all the nodes belonging to the other graph. Formally, a cross-graph message passing layer for nodes *V*₁ may be written as ${z}_{i}^{′} = UPD \left({z}_{i}, AGGR\left(\left\{{m}_{ij}, ∀j∈{U}_{2}\right\}\right)\right) , i ∈ {V}_{1} , {U}_{2} ⊆ {V}_{2} .$

Nodes *V*₂ are transformed in an analogous symmetrical way. An edge between two nodes belonging to two separate graphs may have no representation, or the representation may be calculated based on the representations of the two nodes. For example, it may be a single number indicating the similarity of two nodes.

Besides message passing, the matcher network (304) may contain any other layers and operations that are commonly found in graph neural networks and neural networks in general. For example, there may be fully connected layers before or between message passing layers, layers that transform edge representations, layers that change the graph's connectivity, residual connections between layers, various normalization layers, pooling layers that reduce the number of nodes, etc. All these layers and operations should be differentiable, ensuring that gradients can be effectively used during the training process.

Inside the matcher network (304), a discriminative graph-level representation may be calculated for each of the two graphs. This may be done similarly as in a standard message passing layer by gathering and aggregating representations of all the nodes of a graph: ${z}_{G} = AGGR \left(\left\{{z}_{i},∀i∈V\right\}\right) .$

In some cases, a graph-level representation may be calculated by a sequence of graph pooling layers. If a graph has a virtual node that is connected to all the nodes of the graph, the representation of this node may be interpreted as a graph-level representation. Each output of the existing message passing layers may be used to calculate a separate graph-level representation, all of which may be joined together. A graph-level representation may be combined with an initial graph-level representation, and may be combined with individual node representations at any place of the network.

To produce a similarity score s between two graphs, two graph-level representations *z*_{*G*1} and *z*_{*G*2} for each of the two graphs may be calculated and compared using some vector similarity metric, like cosine similarity: $s = \frac{{{z}_{G 1}}^{T} {z}_{G 2}}{\left‖{z}_{G 1}\right‖ \left‖{z}_{G 2}\right‖} .$

Alternatively, first a joint graph-level representation of the two graphs may be calculated by concatenating or multiplying elementwise the graph-level representations of the two graphs, or by gathering and aggregating representations of all the nodes of the two graphs. Then this joint graph-level representation can be reduced with fully connected layers to a single value indicating the similarity.

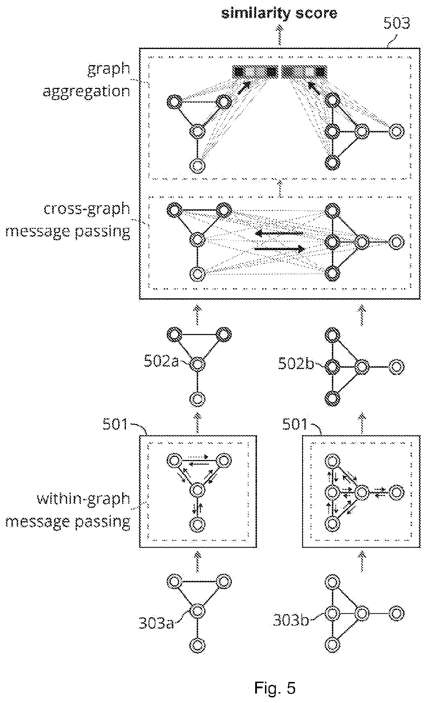

In certain cases, it may be beneficial to split the matcher network (304) into two separate networks. Such a variant of the present matching method is shown in Fig. 5. The first graph neural network (501), which in this description is called the embedder network (or *embedder* for short), takes a single initial graph *G* = (*V, E*) (303a) and performs only within-graph operations, producing the embedded graph *G*' = (*V', E'*) (502a): $G ′ = EMBEDDER \left(G\right) .$

An embedded graph (502a) contains node embeddings *zᵢ*, ∀*i* ∈ *V',* which are final node representations before cross-graph message passing. In addition to node embeddings, the embedded graph (502a) may also contain edge embeddings *zᵢⱼ,* ∀(*i, j*) ∈ *E',* and may also contain a graph-level embedding *z_{G}*. The number of node embeddings in the embedded graph (502a) does not need to correspond to the number of nodes in the initial graph (301a). For example, if there are two types of nodes, the embedder network may return embeddings associated with only single type of nodes. The same applies to edges if their embeddings are returned. The embedded graph (502a) may be stored as a template in a template database, and retrieved whenever one needs to match a given fingerprint with the templates in a database.

The second neural network (503) is another variant of the matcher network which now produces a similarity score s from two embedded graphs ${G}_{1}^{′}$ (502a) and ${G}_{2}^{′}$ (502b): $s = MATCHER \left({G}_{1}^{′}, {G}_{2}^{′}\right) .$

This variant of the matcher network mainly contains cross-graph operations, including cross-graph message passing layers. For example, the matcher network (503) may first compute a score matrix indicating how well the nodes of one graph match to the nodes of the other graph, then perform pooling for each of the two graphs to leave only those nodes which have matches, then create cross-edges between those nodes which are most similar, then perform cross-graph message passing, and finally aggregate node representations of both graphs into a single representation, which then is reduced to a final score value. In some cases, the matcher network (503) may also contain within-graph message passing layers. In some of these cases, the two embedded graphs (502a, 502b) given to the matcher network (503) may have no edge information and edges as well as their representations may be created only inside the matcher network (503).

To function properly and output reasonable similarity scores, the graph neural network-i.e. the matcher network (303), or the embedder network (501) combined with the matcher network that operates on embedded graphs (503)-should be trained on a sufficiently large fingerprint database with known finger identities. A chosen fingerprint feature extraction algorithm is first run on a fingerprint database to produce initial sets of features, which are used to construct the initial graphs. Since all operations inside the graph neural network are differentiable, the training procedure is end-to-end and may involve sampling pairs of graphs with known pair labels that are either positive (same finger) or negative (different fingers), feeding these pairs of graphs into the neural network to predict similarity scores, and minimizing a chosen loss function which measures how well predicted similarity scores correspond to pair labels. The entire training procedure can be performed using machine learning frameworks, such as TensorFlow or PyTorch.

The trained neural network and the entire algorithm for fingerprint feature matching necessitate implementation on a computer system equipped with suitable hardware and software components to effectively execute the method. The algorithm must be integrated into a specific software application, which can be developed using appropriate programming languages, such as Python, C++, or Java, and leveraging relevant machine learning libraries or frameworks to facilitate graph neural network computations. The computer system should be configured with sufficient processing power, memory, and storage capabilities to handle the complex calculations involved in executing the method.

After the graph neural network is trained and the algorithm is developed, the software application encompassing the algorithm can be integrated into a fingerprint-based biometric authentication system. Such a system involves an enrolment process as well as verification or identification processes. In the enrolment process, a subject's fingerprint template is produced and stored in a template database. In the verification process, a subject's fingerprint template is produced and compared with the template of the claimed identity in the database, resulting in a similarity score which is used to make a match/non-match decision. In the identification process, the subject does not explicitly claim an identity, and the system compares the produced fingerprint template against the templates of all subjects in the database, outputting a candidate list of matched identities that may be empty.

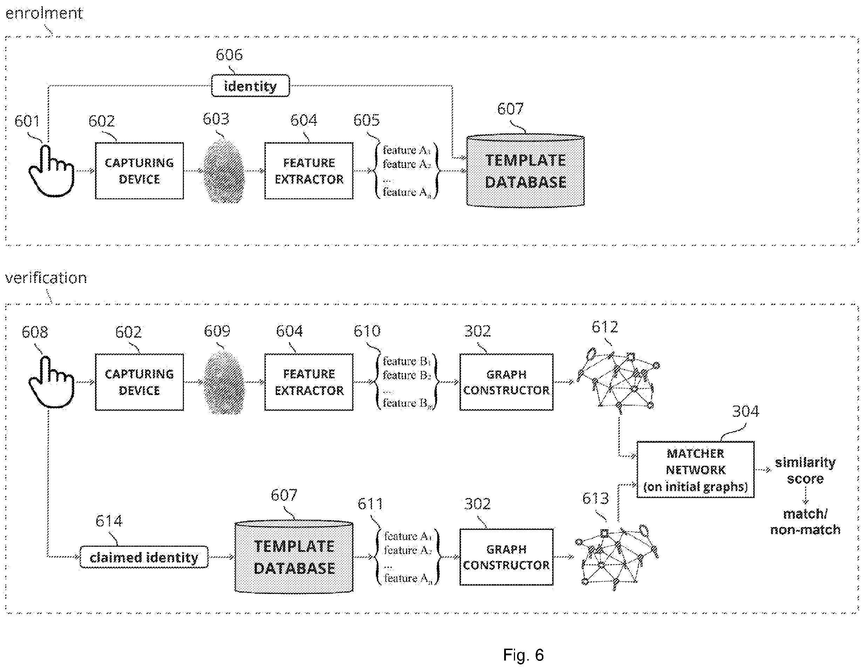

A biometric authentication system that uses the present fingerprint feature matching method can be designed in at least two ways. In one case (Fig. 6), only a single neural network is used, i.e. the matcher operating on initial graphs (304). In this case, the enrolment process does not involve the use of graph neural networks and consists of the following steps: scanning a subject's finger (601) with a capturing device (602), such as fingerprint scanner or contactless camera, running the obtained fingerprint (603) through a feature extractor (604) to produce a feature set (605), and storing the feature set (605) as a template together with the subject's identity (606) in a template database (607). In the verification process, the matcher network (304) is used to compare two graphs (612, 613) constructed (302) from two feature sets (610, 611), the first feature set (610) produced from the current subject's finger (608), the second feature set (611) retrieved from the template database (607) based on the claimed identity (614). In the identification process, the system compares the feature set (610) extracted from the captured fingerprint (609) against the feature sets of all the subjects in the database (607) using the matcher network (304).

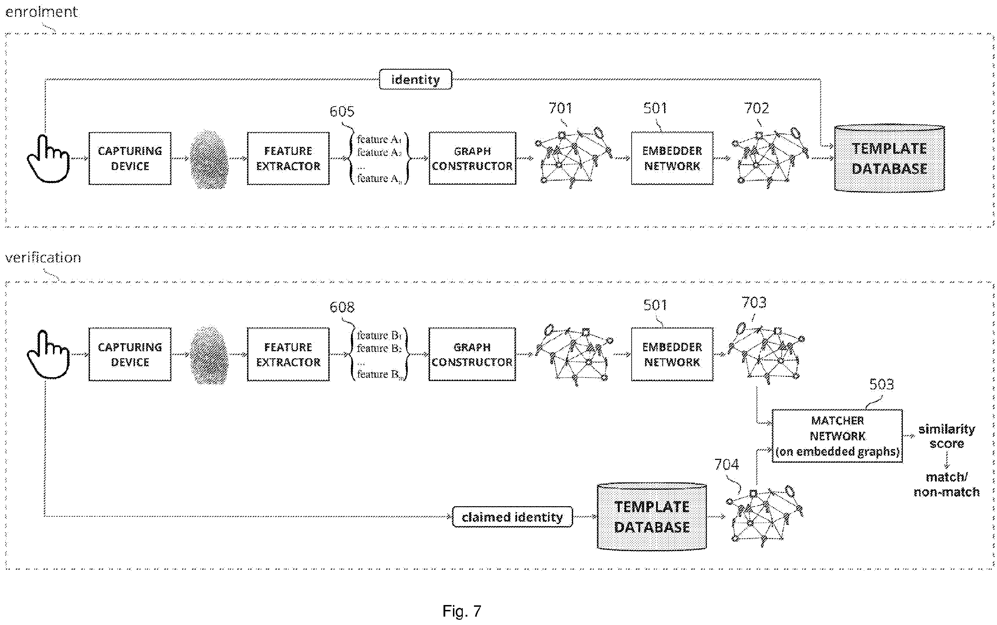

Another way of designing a biometric authentication system that incorporates the present method is by using two graph neural networks, i.e. the embedder (501) and the matcher operating on embedded graphs (503). In this case (Fig. 7), the enrolment process involves the additional step of constructing a graph (701) from a feature set (605) and embedding it with the embedder (501); an embedded graph (702) is stored in the template database. The verification or identification process uses the embedder (501) to produce the embedded graph (703) of the current subject and compares this graph with the embedded graph (704) retrieved from the database using the matcher (503).

It is important to note that the present method is not limited to only prints of fingers. In fact, the method and a biometric authentication system that incorporates the method can operate based on other friction ridge patterns of a subject. Prints or impressions of these other friction ridge patterns include, for example, palmprints and footprints.

In the above description, numerous characteristics, details, and potential applications of the present invention have been outlined. The description serves as exemplary embodiments of the invention. Without deviating from the core principles of the invention, there may be changes in the details, in accordance with the most widely understood meanings of the concepts and definitions used in the claims.

### References

[1] Engelsma, J.J., Cao, K., Jain, A.K. (2022). Fixed length fingerprint representation. United States Patent 11,373,438 B2.
[2] Chikkerur, S., Cartwright, A.N., Govindaraju, V. (2005). K-plet and Coupled BFS: A Graph Based Fingerprint Representation and Matching Algorithm. In: Zhang, D., Jain, A.K. (eds) Advances in Biometrics. ICB 2006. Lecture Notes in Computer Science, vol. 3832. Springer, Berlin, Heidelberg.
[3] Fu, X., Liu, C., Bian, J., Feng, J., Wang, H., Mao, Z. (2013). Extended clique models: A new matching strategy for fingerprint recognition. In: Proceedings of International Conference on Biometrics (ICB) (pp. 1-6), Madrid, Spain.
[4] Xu, Y., Lu, G., Lu, Y., Liu, F., Zhang, D. (2018). Fingerprint Pore Comparison Using Local Features and Spatial Relations. In: IEEE Transactions on Circuits and Systems for Video Technology, vol. 29, no. 10, pp. 2927-2940.
[5] Li, Y., Gu, C., Dullien, T., Vinyals, O., Kohli, P. (2019). Graph matching networks for learning the similarity of graph structured objects. In: International Conference on Machine Learning, PMLR, pp. 3835-3845.
[6] Fey, M., Lenssen, J.E., Morris, C., Masci, J., Kriege, N.M. (2020). Deep graph matching consensus. In: International Conference on Learning Representations.
[7] Shi, Y., Zhang, Z., Liu, S., Liu, M. (2023). Towards More Accurate Matching of Contactless Fingerprints With a Deep Geometric Graph Convolutional Network. In: IEEE Transactions on Biometrics, Behavior, and Identity Science, vol. 5, no. 1, pp. 29-38.

## Claims

1. A method for fingerprint feature matching, comprising
receiving the first set of fingerprint features with their initial descriptors,
where each initial descriptor comprises attributes of a corresponding fingerprint feature, and
receiving the second set of fingerprint features with their initial descriptors,
where each initial descriptor comprises attributes of a corresponding fingerprint feature,
constructing the first graph comprising nodes and edges, where nodes represent local fingerprint features from the first set, and edges connect adjacent nodes, and
constructing the second graph comprising nodes and edges, where nodes represent local fingerprint features from the second set, and edges connect adjacent nodes,
a constructed graph *G =* (*V, E*) comprises a set of nodes V and a set of edges *E,*
each node is associated with a numerical representation *zᵢ*, ∀*i* ∈ *V* and
each edge is associated with a numerical representation *zᵢⱼ, ∀*(*i, j*) ∈ *E,*
initial node representations are initial descriptors of corresponding local fingerprint features,
initial edge representations are initial descriptors of corresponding fingerprint features between two local fingerprint features, or
initial edge representations are derived from initial node representations,
updating the node representations of the first graph and the node representations of the second graph by a graph neural network,
inside the graph neural network, node representations are transformed and updated by message passing layers,
for each node, a message passing layer gathers messages through edges from the node's neighbours and aggregates these messages into a new node representation,
matching the first set and the second set of fingerprint features by matching the first graph and the second graph with the graph neural network, and producing a similarity score,
**characterized in that**
the message passing layers are within-graph and cross-graph,
where a within-graph layer pass messages only between nodes belonging to the same graph,
where a cross-graph layer pass messages between nodes belonging to the two separate graphs being matched,
after message passing, matching of the two graphs is performed by aggregating the updated node representations of both graphs into a single vector and reducing this vector to a single value representing the similarity score between the two graphs,
all operations inside the graph neural network are differentiable, so that the graph neural network can be trained using gradient-based optimization methods in an end-to-end fashion.

2. Method according to claim 1, where a graph itself has graph-level attributes that are associated with global fingerprint features,
a vector of these attributes is an initial graph-level representation.

3. Method according to claim 1, where a message passing layer transforms a node representation *zᵢ* to a new representation ${z}_{i}^{′}$ as ${z}_{i}^{′} = UPD \left({z}_{i},AGGR\left(\left\{{m}_{ij},∀j∈N\left(i\right)\right\}\right)\right) ,$ ${m}_{ij} = MSG \left({z}_{i}, {z}_{j}, {z}_{ij}\right) ,$
where _{MSG} is a function that calculates a message *mᵢⱼ* from the *j*-th node to the *i*-th node, _{AGGR} is a function that aggregates messages from the *i*-th node's neighborhood *N*(*i*)*,* which is a set of nodes connected to node *i*, to a single vector, _{UPD} is a function that combines the initial node representation with the aggregation result and produces the updated node representation,
if a message passing layer is within-graph, then *N(i)* ⊆ *V*₁ when *i* ∈ *V*₁, and *N(i)* ⊆ *V*₂ when *i* ∈ *V*₂, where *V*₁ is a set of nodes of the first graph and *V*₂ is a set of nodes of the second graph,
if a message passing layer is cross-graph, then *N*(*i*) ⊆ *V*₂ when *i* ∈ *V*₁, and *N*(*i*) ⊆ *V*₁ when *i* ∈ *V₂*, where *V*₁ is a set of nodes of the first graph and *V*₂ is a set of nodes of the second graph.

4. Method according to any one of previous claims, where a graph-level representation is calculated for each of the two graphs by any of the following methods:
by gathering and aggregating representations of all the nodes of a graph, and combining the aggregation result with an initial graph-level representation,
by a sequence of graph pooling layers, and combining the pooling result with an initial graph-level representation,
if a graph has a virtual node that is connected to all the nodes of the graph, the representation of this node is taken as a graph-level representation, and combined with an initial graph-level representation.

5. Method according claim 4, where each output of existing message passing layers is used to calculate a separate graph-level representation, all of which are joined together into a single representation.

6. Method according claim 4, where a graph-level representation is combined with node representations at any place of the network.

7. Method according to any one of previous claims, where a joint graph-level representation of both graphs is calculated by any of the following methods:
by concatenating the graph-level representations of the two graphs,
by multiplying elementwise the graph-level representations of the two graphs,
by gathering and aggregating representations of all the nodes of the two graphs.

8. Method according to any one of previous claims, where a similarity score between two graphs is produced
from graph-level representations of the two graphs,
two graph-level representations are compared using a vector similarity metric, such as cosine similarity or Euclidean distance,
from a joint graph-level representation of the two graphs,
a joint graph-level representation is reduced to a single value by fully connected layers.

9. Method according to any one of previous claims, where the graph neural network comprises any other differentiable layers and operations of generic graph neural networks, including
layers that change the connectivity of a graph,
fully connected layers that transform node, edge or graph-level representations,
layers that transform edge representations,
various normalization layers,
pooling layers that reduce the number of nodes,
residual connections between layers.

10. Method according to any one of previous claims, where the graph neural network is split into two separate networks,
where the first graph neural network, the embedder network, takes a single initial graph *G =* (*V, E*) and produces the embedded graph *G*' *=* (*V', E'*),
where the embedder network performs only within-graph operations,
where the embedded graph comprises
node embeddings *zᵢ*, ∀*i* ∈ *V*', which are final node representations before cross-graph message passing,
edge embeddings *zᵢⱼ,* ∀(*i, j*) ∈ *E',*
a graph-level embedding *z_{G}*.
where the second neural network, the matcher network, takes two embedded graphs ${G}_{1}^{′}$ and ${G}_{2}^{′}$ and produces a similarity score,
where the matcher network performs within-graph and cross-graph operations.

11. Method according to claim 10, where
the number of node embeddings does not correspond to the number of nodes in the initial graph,
the number of edge embeddings does not correspond to the number of edges in the initial graph.

12. Method according to claims 10 or 11, where two embedded graphs given to the matcher network have no edge information and edges as well as their representations are created only inside the matcher network.

13. Method according to any one of previous claims, where the training procedure of the graph neural network comprises
obtaining a fingerprint database with known finger identities,
running a chosen fingerprint feature extraction algorithm on the fingerprint database to produce initial sets of features,
constructing initial graphs from initial sets of features,
sampling pairs of graphs with known pair labels, which are either positive (same finger) or negative (different fingers), feeding these pairs of graphs into the neural network to predict similarity scores, and minimizing a chosen loss function, which measures how well predicted similarity scores correspond to pair labels.

## Patentansprüche

1. Verfahren zum Fingerabdruckmerkmalsabgleich, umfassend
Empfangen des ersten Satzes von Fingerabdruckmerkmalen mit deren anfänglichen Deskriptoren,
wobei jeder anfängliche Deskriptor Attribute eines entsprechenden Fingerabdruckmerkmals umfasst, und
Empfangen des zweiten Satzes von Fingerabdruckmerkmalen mit deren anfänglichen Deskriptoren,
wobei jeder anfängliche Deskriptor Attribute eines entsprechenden Fingerabdruckmerkmals umfasst,
Erstellen des ersten Graphen, der Knoten und Kanten umfasst, wobei die Knoten lokale Fingerabdruckmerkmale aus dem ersten Satz darstellen und die Kanten benachbarte Knoten verbinden, und
Erstellen des zweiten Graphen, der Knoten und Kanten umfasst, wobei die Knoten lokale Fingerabdruckmerkmale aus dem zweiten Satz darstellen und die Kanten benachbarte Knoten verbinden,
wobei ein erstellter Graph *G=(V, E)* einen Satz von Knoten *V* und einen Satz von Kanten *E* umfasst,
jeder Knoten einer numerischen Darstellung *z_{i,} ∀i* ∈ *V* zugeordnet ist und jede Kante einer numerischen Darstellung *z_{ij,} ∀(i,j) ∈ E* zugeordnet ist,
wobei anfängliche Knotendarstellungen anfängliche Deskriptoren entsprechender lokaler Fingerabduckmerkmale sind, anfängliche Kantendarstellungen anfängliche Deskriptoren entsprechender Fingerabduckmerkmale zwischen zwei lokalen Fingerabdruckmerkmalen sind oder anfängliche Kantendarstellungen von anfänglichen Knotendarstellungen abgeleitet sind,
Aktualisieren der Knotendarstellungen des ersten Graphen und der Knotendarstellungen des zweiten Graphen durch ein graphenbasiertes neuronales Netzwerk,
wobei innerhalb des graphenbasierten neuronalen Netzwerks Knotendarstellungen durch Nachrichtenübermittlungsschichten umgewandelt und aktualisiert werden,
wobei für jeden Knoten eine Nachrichtenübermittlungsschicht Nachrichten durch Kanten von den Nachbarn des Knotens einholt und diese Nachrichten in eine neue Knotendarstellung aggregiert,
Abgleichen des ersten Satzes und des zweiten Satzes von Fingerabdruckmerkmalen durch Abgleichen des ersten Graphen und des zweiten Graphen mit dem graphenbasierten neuronalen Netzwerk und Erzeugen einer Ähnlichkeitsbewertung,
**dadurch gekennzeichnet, dass**
die Nachrichtenübermittlungsschichten graphenintern und graphenübergreifend sind,
wobei eine grapheninterne Schicht nur Nachrichten zwischen Knoten übermitteln, die zu demselben Graphen gehören,
wobei eine graphenübergreifende Schicht Nachrichten zwischen Knoten übermitteln, die zu den zwei separaten Graphen gehören, die abgeglichen werden,
wobei nach der Nachrichtenübermittlung durch Aggregieren der aktualisierten Knotendarstellungen der beiden Graphen in einen einzelnen Vektor und Reduzieren dieses Vektors auf einen einzelnen Wert, der die Ähnlichkeitsbewertung zwischen den zwei Graphen darstellt, Abgleichen der zwei Graphen durchgeführt wird,
wobei alle Operationen innerhalb des graphenbasierten neuronalen Netzwerks differenzierbar sind, sodass das graphenbasierte neuronale Netzwerk unter Verwendung gradientenbasierter Optimierungsverfahren Ende-zu-Ende trainiert werden kann.

2. Verfahren nach Anspruch 1, wobei ein Graph selbst Attribute auf Graphenebene aufweist, die globalen Fingerabdruckmerkmalen zugeordnet sind,
wobei ein Vektor dieser Attribute eine anfängliche Darstellung auf Graphenebene ist.

3. Verfahren nach Anspruch 1, wobei eine Nachrichtenübermittlungsschicht eine Knotendarstellung *zᵢ* wie folgt in eine neue Darstellung *z'ᵢ* umwandelt: $\begin{matrix}Z {′}_{i} = UPD \left({Z}_{i}, AGGR\left(\left\{{m}_{ij}, {∀}_{j}∈N\left(i\right)\right\}\right)\right) , \\ {m}_{ij} = MSG \left({Z}_{i}, {Z}_{j}, {Z}_{ij}\right) ,\end{matrix}$
wobei MSG eine Funktion ist, die eine Nachricht *mᵢⱼ* von dem *j*-ten an den *i*-ten Knoten berechnet, AGGR eine Funktion ist, welche die Nachrichten aus der Nachbarschaft *N*(*i*) des *i*-ten Knotens, die ein Satz von Knoten ist, die mit dem Knoten *i* verbunden sind, zu einem einzelnen Vektor aggregiert, und UPD eine Funktion ist, welche die anfängliche Knotendarstellung mit dem Aggregationsergebnis kombiniert und die aktualisierte Knotendarstellung erzeugt, wobei
wenn eine Nachrichtenübermittlungsschicht graphenintern ist, dann *N*(*i) ⊆ V₁*, *wenn i* ∈ *V₁*, *und N*(*i*) *⊆ V*₂, wenn *i* ∈ *V₂*, wobei *V₁* ein Satz von Knoten des ersten Graphen ist und *V₂* ein Satz von Knoten des zweiten Graphen ist,
wenn eine Nachrichtenübermittlungsschicht graphenübergreifend ist, dann *N*(*i) ⊆ V*₂*, wenn i* ∈ *V₁*, *und N*(*i*) *⊆ V₁*, wenn *i* ∈ *V₂*, wobei *V₁* ein Satz von Knoten des ersten Graphen ist und *V₂* ein Satz von Knoten des zweiten Graphen ist.

4. Verfahren nach einem der vorhergehenden Ansprüche, wobei eine Darstellung auf Graphenebene für jeden der zwei Graphen durch eines der folgenden Verfahren berechnet wird:
durch Einholen und Aggregieren der Darstellungen von allen Knoten eines Graphen und Kombinieren des Aggregationsergebnisses mit einer anfänglichen Darstellung auf Graphenebene,
durch eine Abfolge von Graph-Pooling-Schichten und Kombinieren des Pooling-Ergebnisses mit einer anfänglichen Darstellung auf Graphenebene,
wenn ein Graph einen virtuellen Knoten aufweist, der mit allen Knoten des Graphen verbunden ist, wird die Darstellung dieses Knotens als eine Darstellung auf Graphenebene genommen und mit einer anfänglichen Darstellung auf Graphenebene kombiniert.

5. Verfahren nach Anspruch 4, wobei jede Ausgabe bestehender Nachrichtenübermittlungsschichten verwendet wird, um eine separate Darstellung auf Graphenebene zu berechnen, die alle in eine einzelne Darstellung zusammengeführt werden.

6. Verfahren nach Anspruch 4, wobei eine Darstellung auf Graphenebene an beliebiger Stelle des Netzwerks mit Knotendarstellungen kombiniert wird.

7. Verfahren nach einem der vorhergehenden Ansprüche, wobei eine gemeinsame Darstellung auf Graphenebene beider Graphen durch eines der folgenden Verfahren berechnet wird:
durch Verketten der Darstellungen auf Graphenebene der zwei Graphen,
durch elementweises Multiplizieren der Darstellungen auf Graphenebene der zwei Graphen,
durch Einholen und Aggregieren der Darstellungen von allen Knoten der zwei Graphen.

8. Verfahren nach einem der vorhergehenden Ansprüche, wobei aus Folgendem eine Ähnlichkeitsbewertung zwischen den zwei Graphen erzeugt wird:
aus Darstellungen auf Graphenebene der zwei Graphen:
zwei Darstellungen auf Graphenebene werden unter Verwendung einer Vektorähnlichkeitsmetrik, wie etwa der Kosinus-Ähnlichkeit oder des euklidischen Abstands, verglichen,
aus einer gemeinsamen Darstellung auf Graphenebene der zwei Graphen:
eine gemeinsame Darstellung auf Graphenebene wird durch vollständig verbundene Schichten auf einen einzelnen Wert reduziert.

9. Verfahren nach einem der vorhergehenden Ansprüche, wobei das graphenbasierte neuronale Netzwerk beliebige andere differenzierbare Schichten und Operationen generischer graphenbasierter neuronaler Netzwerke umfasst, einschließlich:
Schichten, welche die Konnektivität eines Graphen ändern, vollständig verbundene Schichten, die Knoten-, Kanten- oder Darstellungen auf Graphenebene umwandeln, Schichten, die Kantendarstellungen umwandeln,
verschiedene Normalisierungsschichten,
Pooling-Schichten, welche die Anzahl an Knoten reduzieren,
Restverbindungen zwischen Schichten.

10. Verfahren nach einem der vorhergehenden Ansprüche, wobei das graphenbasierte neuronale Netzwerk in zwei separate Netzwerke aufgeteilt wird,
wobei das erste graphenbasierte neuronale Netzwerk, das Einbettungsnetzwerk, einen einzelnen anfänglichen Graphen *G = (V, E)* nimmt und den eingebetteten Graphen *G' = (V',E')* erzeugt*,*
wobei das Einbettungsnetzwerk ausschließlich grapheninterne Operationen durchführt,
wobei der eingebettete Graph Folgendes umfasst:
Knoteneinbettungen *zᵢ, ∀i ∈ V'*, die finale Knotendarstellungen vor einer graphenübergreifenden Nachrichtenübermittlung sind,
Kanteneinbettungen *zᵢⱼ, ∀(i,j) ∈ E'*,
eine Einbettung z_{G} auf Graphenebene.
wobei das zweite neuronale Netzwerk, das Abgleichungsnetzwerk, zwei eingebettete Graphen *G'₁* und *G'₂* nimmt und eine Ähnlichkeitsbewertung erzeugt,
wobei das Abgleichungsnetzwerk grapheninterne und graphenübergreifende Operationen durchführt.

11. Verfahren nach Anspruch 10, wobei
die Anzahl an Knoteneinbettungen nicht der Anzahl an Knoten in dem anfänglichen Graphen entspricht,
die Anzahl an Kanteneinbettungen nicht der Anzahl an Kanten in dem anfänglichen Graphen entspricht.

12. Verfahren nach Anspruch 10 oder 11, wobei zwei eingebettete Graphen, die dem Abgleichungsnetzwerk gegeben werden, keine Kanteninformationen aufweisen und die Kanten sowie deren Darstellungen ausschließlich innerhalb des Abgleichungsnetzwerks erzeugt werden.

13. Verfahren nach einem der vorhergehenden Ansprüche, wobei die Trainingsprozedur des graphenbasierten neuronalen Netzwerks Folgendes umfasst:
Erlangen einer Fingerabdruckdatenbank mit bekannten Fingeridentitäten,
Ausführen eines ausgewählten Fingerabdruckmerkmalsextraktionsalgorithmus an der Fingerabdruckdatenbank, um anfängliche Sätze von Merkmalen zu erzeugen,
Erstellen von anfänglichen Graphen aus den anfänglichen Sätzen von Merkmalen,
Sampling von Graphenpaaren mit bekannten Paar-Labels, die entweder positiv (derselbe Finger) oder negativ (andere Finger) sind, Zuführen dieser Graphenpaare in das neuronale Netzwerk, um Ähnlichkeitsbewertungen vorherzusagen, und Minimieren einer ausgewählten Verlustfunktion, die misst, wie gut die vorhergesagten Ähnlichkeitsbewertungen den Paar-Labels entsprechen.

## Revendications

1. Procédé de mise en correspondance de caractéristiques d'empreintes digitales, comprenant
la réception du premier ensemble de caractéristiques d'empreintes digitales avec leurs descripteurs initiaux,
où chaque descripteur initial comprend des attributs d'une caractéristique d'empreinte digitale correspondante, et
la réception du second ensemble de caractéristiques d'empreintes digitales avec leurs descripteurs initiaux,
où chaque descripteur initial comprend des attributs d'une caractéristique d'empreinte digitale correspondante,
la construction du premier graphe comprenant des nœuds et des arêtes, où les nœuds représentent des caractéristiques d'empreintes digitales locales du premier ensemble, et les arêtes relient des nœuds adjacents, et
la construction du second graphe comprenant des nœuds et des arêtes, où les nœuds représentent des caractéristiques d'empreintes digitales locales du second ensemble, et les arêtes relient des nœuds adjacents,
un graphe construit *G = (V, E)* comprend un ensemble de nœuds *V* et un ensemble d'arêtes *E*,
chaque nœud est associé à une représentation numérique *z_{i,} ∀i ∈ V* et chaque arête est associée à une représentation numérique *z_{ij,} ∀(i,j) ∈ E*,
des représentations de nœud initiales sont des descripteurs initiaux de caractéristiques d'empreintes digitales locales correspondantes,
des représentations d'arête initiales sont des descripteurs initiaux de caractéristiques d'empreintes digitales correspondantes entre deux caractéristiques d'empreintes digitales locales, ou
des représentations d'arête initiales sont dérivées de représentations de nœud initiales,
la mise à jour des représentations de nœud du premier graphe et des représentations de nœud du second graphe par un réseau neuronal en graphes,
à l'intérieur du réseau neuronal en graphes, des représentations de nœud sont transformées et mises à jour par des couches de transmission de messages,
pour chaque nœud, une couche de transmission de messages rassemble des messages à travers des arêtes depuis les voisins du nœud et agrège ces messages en une nouvelle représentation de nœud,
la mise en correspondance du premier ensemble et du second ensemble de caractéristiques d'empreintes digitales par la mise en correspondance du premier graphe et du second graphe avec le réseau neuronal en graphes, et la production d'un score de similarité,
**caractérisé en ce que**
les couches de transmission de messages sont intra-graphe et inter-graphes,
où une couche intra-graphe transmet des messages uniquement entre des nœuds appartenant au même graphe, où une couche inter-graphes transmet des messages entre des nœuds appartenant aux deux graphes séparés mis en correspondance,
après la transmission de messages, la mise en correspondance des deux graphes est réalisée par l'agrégation des représentations de nœud mises à jour des deux graphes en un vecteur unique et la réduction de ce vecteur à une valeur unique représentant le score de similarité entre les deux graphes,
toutes les opérations à l'intérieur du réseau neuronal en graphes sont différentiables, de sorte que le réseau neuronal en graphes peut être entraîné en utilisant des procédés d'optimisation basés sur un gradient d'une manière de bout en bout.

2. Procédé selon la revendication 1, où un graphe lui-même a des attributs au niveau du graphe qui sont associés à des caractéristiques d'empreintes digitales globales,
un vecteur de ces attributs est une représentation au niveau du graphe initiale.

3. Procédé selon la revendication 1, où une couche de transmission de messages transforme une représentation de nœud zᵢ en une nouvelle représentation z'ᵢ sous la forme de $Z {′}_{i} = UPD \left({Z}_{i}, AGGR\left(\left\{{m}_{ij}, {∀}_{j}∈N\left(i\right)\right\}\right)\right) ,$ ${m}_{ij} = MSG \left({Z}_{i}, {Z}_{j}, {Z}_{ij}\right) ,$
où MSG est une fonction qui calcule un message *mᵢⱼ* depuis le *j*-ième nœud vers le *i*-ième nœud, AGGR est une fonction qui agrège des messages depuis le voisinage *N(i)* du i-ième nœud, lequel est un ensemble de nœuds reliés au nœud *i*, en un vecteur unique, UPD est une fonction qui combine la représentation de nœud initiale avec le résultat d'agrégation et produit la représentation de nœud mise à jour,
si une couche de transmission de messages est intra-graphe, alors
*N*(*i) ⊆ V₁ lorsque i ∈ V₁*, *et N*(*i*) *⊆ V₂* lorsque *i* ∈ *V₂*, où *V₁* est un ensemble de nœuds du premier graphe et *V₂* est un ensemble de nœuds du second graphe,
si une couche de transmission de messages est inter-graphes, alors
*N*(*i*) *⊆ V₂ lorsque i* ∈ *V₁*, *et N*(*i*) *⊆ V₁* lorsque *i* ∈ *V₂*, où *V₁* est un ensemble de nœuds du premier graphe et *V₂* est un ensemble de nœuds du second graphe.

4. Procédé selon l'une quelconque des revendications précédentes, où une représentation au niveau du graphe est calculée pour chacun des deux graphes par l'un quelconque des procédés suivants :
par le rassemblement et l'agrégation de représentations de tous les nœuds d'un graphe, et la combinaison du résultat d'agrégation avec une représentation au niveau du graphe initiale,
par une séquence de couches de regroupement de graphes, et la combinaison du résultat de regroupement avec une représentation au niveau du graphe initiale,
si un graphe a un nœud virtuel qui est relié à tous les nœuds du graphe, la représentation de ce nœud est prise comme une représentation au niveau du graphe, et combinée avec une représentation au niveau du graphe initiale.

5. Procédé selon la revendication 4, où chaque sortie de couches de transmission de messages existantes est utilisée pour le calcul d'une représentation au niveau du graphe séparée, lesquelles sont toutes jointes ensemble en une représentation unique.

6. Procédé selon la revendication 4, où une représentation au niveau du graphe est combinée avec des représentations de nœud à n'importe quel endroit du réseau.

7. Procédé selon l'une quelconque des revendications précédentes, où une représentation au niveau du graphe jointe des deux graphes est calculée par l'un quelconque des procédés suivants :
par la concaténation des représentations au niveau du graphe des deux graphes,
par la multiplication élément par élément des représentations au niveau du graphe des deux graphes,
par le rassemblement et l'agrégation de représentations de tous les nœuds des deux graphes.

8. Procédé selon l'une quelconque des revendications précédentes, où un score de similarité entre deux graphes est produit
à partir de représentations au niveau du graphe des deux graphes,
deux représentations au niveau du graphe sont comparées en utilisant une métrique de similarité de vecteurs, telle qu'une similarité cosinus ou une distance euclidienne,
à partir d'une représentation au niveau du graphe jointe des deux graphes,
une représentation au niveau du graphe jointe est réduite à une valeur unique par des couches entièrement reliées.

9. Procédé selon l'une quelconque des revendications précédentes, où le réseau neuronal en graphes comprend de quelconques autres couches et opérations différentiables de réseaux neuronaux en graphes génériques, incluant
des couches qui modifient la connectivité d'un graphe, des couches entièrement reliées qui transforment des représentations de nœud, d'arête ou au niveau du graphe, des couches qui transforment des représentations d'arête, diverses couches de normalisation,
des couches de regroupement qui réduisent le nombre de nœuds,
des liaisons résiduelles entre des couches.

10. Procédé selon l'une quelconque des revendications précédentes, où le réseau neuronal en graphes est divisé en deux réseaux séparés,
où le premier réseau neuronal en graphes, le réseau intégrateur, prend un graphe initial unique *G = (V, E)* et produit le graphe intégré *G' = (V',E'),*
où le réseau intégrateur réalise uniquement des opérations intra-graphe,
où le graphe intégré comprend
des intégrations de nœud *zᵢ, ∀i ∈ V'*, qui sont des représentations de nœud finales avant une transmission de messages inter-graphes,
des intégrations d'arête *zᵢⱼ, ∀(i,j) ∈ E',*
une intégration au niveau du graphe z_{G},
où le second réseau neuronal, le réseau de mise en correspondance, prend deux graphes intégrés *G'1* et *G'2* et produit un score de similarité,
où le réseau de mise en correspondance réalise des opérations intra-graphe et inter-graphes.

11. Procédé selon la revendication 10, où
le nombre d'intégrations de nœud ne correspond pas au nombre de nœuds dans le graphe initial,
le nombre d'intégrations d'arête ne correspond pas au nombre d'arêtes dans le graphe initial.

12. Procédé selon les revendications 10 ou 11, où deux graphes intégrés donnés au réseau de mise en correspondance n'ont pas d'informations d'arête et des arêtes ainsi que leurs représentations sont créées uniquement à l'intérieur du réseau de mise en correspondance.

13. Procédé selon l'une quelconque des revendications précédentes, où la procédure d'entraînement du réseau neuronal en graphes comprend
l'obtention d'une base de données d'empreintes digitales avec des identités de doigts connues,
l'exécution d'un algorithme d'extraction de caractéristiques d'empreintes digitales choisi sur la base de données d'empreintes digitales pour la production d'ensembles de caractéristiques initiaux,
la construction de graphes initiaux à partir d'ensembles de caractéristiques initiaux,
l'échantillonnage de paires de graphes avec des étiquettes de paires connues, qui sont soit positives (même doigt) soit négatives (doigts différents), l'introduction de ces paires de graphes dans le réseau neuronal pour la prédiction de scores de similarité, et la minimisation d'une fonction de perte choisie, qui mesure dans quelle mesure des scores de similarité prédits correspondent à des étiquettes de paires.
